# EUROPEAN PATENT APPLICATION

(11) **EP 4 556 503 A1**
(43) Date of publication of application: **21.05.2025**
(21) Application number: 23209919.2
(22) Date of filing: 14.11.2023
(51) Int. Cl.: C08G 59/40, C08L 63/00, C09J 163/00

(54) **HEAT-CURING EPOXY RESIN COMPOSITION SUITABLE FOR PRE-CURING PROCESSES WITHOUT ADDITIONAL METAL JOINING TECHNIQUES**

(71) Applicant: Sika Technology AG, 6340 Baar (CH)
(72) Inventor: GALLO, Dominique, 8106 Adlikon bei Regensdorf (CH)
(74) Representative: Sika Patent Attorneys

(57) **Abstract**

The invention relates to a thermosetting one-component epoxy resin composition comprising at least one liquid aromatic epoxy resin **A1,** at least one solid epoxy resin **A2**, at least one curing agent **B** for epoxy resins, at least one core-shell polymer **D1** and at least one terminally blocked polyurethane polymer **D2.** The weight ratio of the at least one liquid epoxy resin **A1** to the at least one solid epoxy resin **A2 (A1/A2)** is from 1.75 - 3.75 and wherein the weight ratio of the at least one core-shell polymer **D1** to the at least one terminally blocked polyurethane polymer **D2 (D1/D2)** is from 1.2 - 4. The epoxy resin compositions that have sufficient lap shear strength without additional metal joining techniques after preliminary curing. Furthermore, the fully cured epoxy resin compositions provide good values for mechanical strength, lap shear strength, impact peel, glass transition temperature (Tg) and fatigue resistance.

## Description

### Technical field

The invention relates to the field of thermosetting one-component epoxy resin compositions, especially for use as bodywork adhesive.

### Prior art

An important field of use of thermosetting one-component epoxy resin compositions is in vehicle construction, especially in bonding in bodywork construction. After the application of the epoxy resin composition, the bodywork is heated in the cathodic electrocoating oven, as a result of which the thermosetting one-component epoxy resin composition is also cured. Nowadays, the epoxy adhesives mentioned are used exclusively in combination with other metal joining techniques such as welding or riveting, since the components bonded would not withstand mechanical stress prior to curing, for example when being transported to the cathodic electrocoating oven.

Partial curing of the epoxy adhesives applied upstream of the cathodic electrocoating oven, for example by means of induction heating, would be a rapid and inexpensive alternative to the costly and inconvenient thermal and mechanical metal joining techniques that have been mentioned.

However, such partial curing operations have the disadvantage that, typically, only limited energy input into the epoxy adhesives is possible resulting in curing progresses achieving too low values for lap shear strength.

In the fully cured state, said epoxy adhesives should further provide good values for mechanical strength, lap shear strength, impact peel and glass transition temperature (Tg). Further, over time and in the life of the bonded part, fatigue can occur to the cured adhesives due to a life of wear and dynamic movement and can lead to premature failure.

Especially at the high temperatures of 180°C in the cathodic electrocoating oven, adhesion of conventional partly cured epoxy adhesives fails without additional metal joining techniques before they reach the final curing.

WO 2022207411 describes a heat-curing epoxy resin compositions containing a curing agent in the form of a mixture of aromatic dicarboxylic dihydrazide with a dihydrazide chosen from the group consisting of glutaric dihydrazide, adipic dihydrazide, pimelic dihydrazide, 8,12-eicosadienedioicacid-1,20-dihydrazide and 4-isopropyl-2,5-dioxoimidazolidine-1,3-di(propionohydrazide). The epoxy resin compositions are particularly suitable for automotive body-in-white bonding, where after induction pre-curing without additional metal joining techniques, the pre-cured adhesives are cured again in a further step at temperatures of around 180 °C.

### Summary of the invention

It is therefore an object of the present invention to provide thermosetting one-component epoxy resin compositions that have sufficient lap shear strength, at room temperature as well as elevated temperatures like 180°C, without additional metal joining techniques after preliminary curing, especially 30 - 60 seconds at 200-210°C. Furthermore, the fully cured epoxy resin composition should provide good values for mechanical strength, lap shear strength, impact peel, glass transition temperature (Tg) and fatigue resistance.

This object was surprisingly achieved by a thermosetting one-component epoxy resin composition as claimed in claim 1. This epoxy resin composition has particularly good usability as a one-component thermosetting adhesive, especially as a thermosetting one-component bodywork adhesive in motor vehicle construction.

### Ways of executing the invention

The present invention relates to thermosetting one-component epoxy resin compositions comprising:
a) at least one liquid epoxy resin **A1** having an average of more than one epoxy group per molecule, preferably 37.5 - 55 % by weight, more preferably 40 - 52.5 % by weight, most preferably 42.5 - 50 % by weight, based on the total weight of the thermosetting one-component epoxy resin composition;
b) at least one solid epoxy resin **A2** having an average of more than one epoxy group per molecule, preferably 10 - 25 % by weight, more preferably 12.5 - 20 % by weight, most preferably 13.5 - 17.5 % by weight, based on the total weight of the thermosetting one-component epoxy resin composition;
c) at least one latent curing agent **B** for epoxy resins, where the latent curing agent **B** is selected from dicyandiamide, guanamines, guanidines, anhydrides of polybasic carboxylic acids and aminoguanidines, preference being given to dicyandiamide;
d) at least one core-shell polymer **D1**; and
e) at least one terminally blocked polyurethane polymer **D2**.

The weight ratio of the at least one liquid epoxy resin **A1** to the at least one solid epoxy resin **A2 (A1/A2)** is from 1.75 - 3.75. The weight ratio of the at least one core-shell polymer **D1** to the at least one terminally blocked polyurethane polymer **D2** (D1/D2) is from 1.2 - 4.

In this document, the use of the term "independently" in connection with substituents, radicals or groups should be interpreted such that the substituents, radicals or groups having the same designation in the same molecule may occur simultaneously with different meanings.

The prefix "poly" in substance names such as "polyol", "polyisocyanate", "polyether" or "polyamine" in the present document indicates that the respective substance, in a formal sense, contains more than one of the functional groups that occur in its name per molecule.

In the present document, "molecular weight" is understood to mean the molar mass (in grams per mole) of a molecule. "Average molecular weight" is understood to mean the number-average molecular weight Mₙ of an oligomeric or polymeric mixture of molecules, which is typically determined by means of GPC against polystyrene as standard.

A "primary hydroxyl group" refers to an OH group bonded to a carbon atom having two hydrogens.

In the present document, the term "primary amino group" refers to an NH₂ group bonded to one organic radical, while the term "secondary amino group" refers to an NH group bonded to two organic radicals which may also together be part of a ring. Accordingly, an amine having one primary amino group is referred to as "primary amine", one having a secondary amino group correspondingly as "secondary amine", and one having a tertiary amino group as "tertiary amine".

In the present document, "room temperature" refers to a temperature of 23°C.

The thermosetting one-component epoxy resin composition comprises a) at least one liquid epoxy resin **A1** having an average of more than one epoxy group per molecule.

Preferred liquid epoxy resins **A1** have the formula (II)

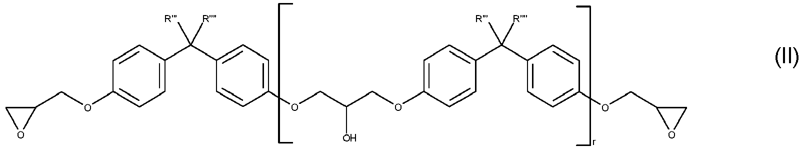

In this formula, the substituents R‴ and R"" are each independently H or CH₃. In addition, the index r has a value of 0 to 1. Preferably, r has a value of less than 0.2.

These are thus preferably diglycidyl ethers of bisphenol A (DGEBA), of bisphenol F and of bisphenol A/F (here, the designation "A/F" refers to a mixture of acetone with formaldehyde which is used as the reactant in the preparation thereof). Such liquid resins are available, for example, as Araldite^{®} GY 250, Araldite^{®} PY 304, Araldite^{®} GY 282 (Huntsman), or D.E.R.^{™} 331, or D.E.R.^{™} 330 (Olin), or Epikote 828 (Hexion).

Moreover, so-called novolacs are suitable epoxy resins **A1**. These have in particular the following formula: 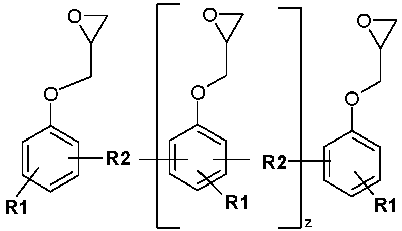 with **R2=** 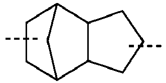 or CH₂, **R1** = H or methyl and z = 0 to 7.

In particular, they are phenol or cresol novolacs (**R2** = CH₂).

Such epoxy resins are commercially available under the trade names EPN or ECN as well as Tactix^{®} 556 from Huntsman or under the product line D.E.N.^{™} from Dow Chemical.

Particular preference is given to bisphenol A diglycidyl ether, bisphenol F diglycidyl ether or bisphenol A / F diglycidyl ether, in particular Araldite^{®} GY 240, Aralite^{®} GY 250, Araldite^{®} GY 281, Araldite^{®} GY 282, Araldite^{®} GY 285, Araldite^{®} PY 304 or Araldite^{®} PY 720 (all from Huntsman), or D.E.R.^{®} 330, D.E.R.^{®} 331, D.E.R.^{®} 332, D.E.R.^{®} 336, D.E.R.^{®} 351, D.E.R.^{®} 352, D.E.R.^{®} 354 or D.E.R.^{®} 356 (all from Olin), or novolak glycidyl ether.

Preferred is a novolak glycidyl ether that is derived from phenol-formaldehyde novolaks, which are also referred to as epoxy phenol novolac resins.

Such novolac glycidyl ethers are commercially available, for example from Olin, Huntsman, Momentive or Emerald Performance Materials. Preferred types are D.E.N.^{®} 431, D.E.N.^{®} 438 or D.E.N.^{®} 439 (from Olin), Araldite^{®} EPN 1179, Araldite^{®} EPN 1180, Araldite^{®} EPN 1182 or Araldite^{®} EPN 1183 (from Huntsman), Epon^{®} 154, Epon^{®} 160 or Epon^{®} 161 (from Momentive) or Epalloy^{®} 8250 , Epalloy^{®} 8330 or Epalloy^{®} 8350 (from Emerald Performance Materials).

More preferably, the liquid epoxy resin **A1** is a liquid epoxy resin of the formula (II).

Preferably, the proportion of the at least one liquid epoxy resin **A1** is 37.5 - 55 % by weight, more preferably 40 - 52.5 % by weight, most preferably 42.5 - 50 % % by weight, based on the total weight of the thermosetting one-component epoxy resin composition.

This is advantageous with respect to high values in fatigue resistance, mechanical properties, lap shear strength and impact peel. This is apparent, for example, in table 2 in the comparison of E4 with E5 and E6.

The thermosetting one-component epoxy resin composition comprises b) at least one solid epoxy resin **A2** having an average of more than one epoxy group per molecule.

Preferred solid epoxy resins have the formula (I)

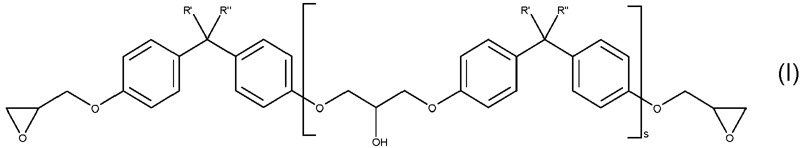

The substituents R' and R" here are independently either H or CH₃ and the index s has a value of > 1.5, especially of 2 to 12.

Such solid epoxy resins are commercially available, for example from Dow or Huntsman or Hexion.

Preferably, the proportion of the at least one solid epoxy resin **A2** is 10 - 25 % by weight, more preferably 12.5 - 20 % by weight, most preferably 13.5 - 17.5 % by weight, based on the total weight of the thermosetting one-component epoxy resin composition.

This is advantageous with respect to high values in fatigue resistance, mechanical properties, lap shear strength and impact peel. This is apparent, for example, in table 2 in the comparison of E4 with E5 and E6.

The weight ratio of the at least one liquid epoxy resin **A1** to the at least one solid epoxy resin **A2 (A1/A2)** is from 1.75 - 3.75.

It has been surprisingly found that ratios higher than 3.75 lead to the disadvantage of decreased values in fatigue resistance, mechanical properties and impact peel at low temperatures. This is apparent, for example, in table 2 in the comparison of Ref2 with E4-E6.

Preferably, the weight ratio of the at least one liquid epoxy resin **A1** to the at least one solid epoxy resin **A2 (A1/A2)** is 1.9 - 3.25, more preferably 2.25 - 3.25. This is advantageous with respect to high values in fatigue resistance, mechanical properties, lap shear strength and impact peel. This is apparent, for example, in table 2 in the comparison of E4 with E5 and E6.

The composition of the invention also contains c) at least one latent curing agent **B** for epoxy resins, where the latent curing agent **B** is selected from dicyandiamide, guanamines, guanidines, anhydrides of polybasic carboxylic acids and aminoguanidines.

More preferably, the curing agent **B** is selected from guanidines, especially dicyandiamide.

The amount of the latent curing agent **B** for epoxy resins is advantageously 0.1-30% by weight, especially 1-20% by weight, preferably 5-15% by weight, especially preferably 7.5-12.5 % by weight, based on the weight of the epoxy resin **A.** Preferably, in the thermosetting one-component epoxy resin composition, the ratio of the proportion of the sum of the epoxy groups of the liquid epoxy resin **A1** and the solid epoxy resin **A2** in mol / proportion of curing agent **B** in mol **((A1+A2)/B)** is 4 - 8, preferably 4.5 - 7.0, more preferably 5.0 - 6.0, most preferably 5.0 - 5.5.

Preferably, the thermosetting epoxy resin composition additionally contains at least one accelerator **C** for epoxy resins. Preferably, the accelerator **C** for epoxy resins is selected from the list consisting of substituted ureas, imidazoles, imidazolines and blocked amines, preferably substituted ureas, more preferably aliphatic substituted ureas.

Preferred substituted ureas are those of the formula (III)

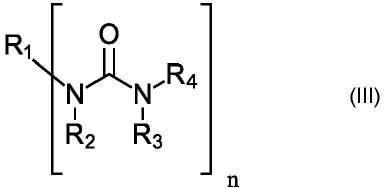

in which R₁ and R₂ are independently hydrogen atoms or monovalent alkyl radicals which have 1 to 10 carbon atoms and optionally also comprise oxygen atoms, nitrogen atoms and/or aromatic units or together form a divalent alkyl radical having 1 to 10 carbon atoms, and which may additionally comprise oxygen atoms, nitrogen atoms or aromatic units; R₃ and R₄ are independently hydrogen atoms or monovalent alkyl radicals which have 1 to 10 carbon atoms and optionally also comprise oxygen atoms or nitrogen atoms; and the index n has a value of 1 or 2.

Preferably, R₁ and R₂ are independently hydrogen atoms or monovalent linear or branched alkyl radicals which have 1 to 10, preferably 1 to 5, more preferably 1 to 4, carbon atoms and optionally together constitute a divalent alkyl radical that forms a ring structure with the adjacent nitrogen atom, and/or R₃ and R₄ independently represent hydrogen atoms or monovalent linear or branched alkyl radicals which have 1 to 10, preferably 1 to 5, more preferably 1 to 4, carbon atoms and optionally together constitute a divalent alkyl radical that forms a ring structure with the adjacent nitrogen atom.

Very particularly preferred substituted ureas of the formula (III) are those in which R₁ and R₂ in formula (III) are both hydrogen atoms and/or in which R₃ and R₄ are both ethyl or methyl groups, preferably methyl groups.

The accelerator **C** especially has a molecule of less than 1000 g/mol, especially between 80 and 800 g/mol. If the molecular weight is greater, the accelerating effect is reduced and the necessary use amount is significantly higher, which can in turn lead to poor mechanical properties.

Preferably, the ratio of the proportion of accelerator **C** in grams per mole of the sum of the epoxy groups of the liquid epoxy resins **A1** and the solid epoxy resin **A2** is preferably 0.1 - 5.0 g/mol of epoxy groups, especially 0.3 - 3.0 g/mol of epoxy groups, more preferably 0.5 - 2.0 g/mol of epoxy groups, most preferably 0.6 - 1.0 g/mol of epoxy groups.

The composition of the invention also contains d) at least one core-shell polymer **D1**. The core-shell polymers **D1** preferably have a rubbery core. The rubbery core preferably has a Tg of less than -20°C, more preferably less than -50°C and even more preferably less than -70°C. Preferably, the Tg value (glass transition temperature) is determined with a Dynamic Mechanical Thermal Analyzer (DMTA).

Further, the core-shell polymer also preferably has at least one shell portion that preferably has a Tg of at least 50°C.

By "core", it is meant an internal portion of the core-shell polymer. The core may form the center of the core-shell polymer, or an internal shell or domain of the core-shell polymer.

A shell is a portion of the core-shell polymer that is exterior to the rubbery core. The shell portion (or portions) typically forms the outermost portion of the core-shell polymer. The shell material is preferably grafted onto the core or is crosslinked or both. The rubbery core may constitute from 50 to 95%, especially from 60 to 90%, of the weight of the core-shell polymer.

The core of the core-shell polymer may be a polymer or copolymer of a conjugated diene such as butadiene, or a lower alkyl acrylate such as n-butyl-, ethyl-, isobutyl- or 2- ethylhexylacrylate. The core polymer may in addition contain up to 20% by weight of other copolymerized monounsaturated monomers such as styrene, vinyl acetate, vinyl chloride, methyl methacrylate, and the like. The core polymer is optionally crosslinked. The core polymer optionally contains up to 5% of a copolymerized graft-linking monomer having two or more sites of unsaturation of unequal reactivity, such as diallyl maleate, monoallyl fumarate, allyl methacrylate, and the like, at least one of the reactive sites being non-conjugated.

The shell polymer, which is optionally chemically grafted or crosslinked to the rubber core, is preferably polymerized from at least one lower alkyl methacrylate such as methyl-, ethyl- or t-butyl methacrylate. Homopolymers of such methacrylate monomers can be used. Further, up to 40% by weight of the shell polymer can be formed from other monovinylidene monomers such as styrene, vinyl acetate, vinyl chloride, methyl acrylate, ethyl acrylate, butyl acrylate, and the like. The molecular weight of the grafted shell polymer is generally between 20,000 and 500,000.

The core-shell polymer may have a number average particle size of at 10 to 300 nanometers, especially 75 to 250 nanometers, as determined by transmission electron spectroscopy.

A preferred type of core-shell polymer has reactive groups in the shell polymer which can react with an epoxy resin or an epoxy resin hardener. Glycidyl groups such as are provided by monomers such as glycidyl methacrylate are suitable.

A particularly preferred type of core-shell polymer is of the type described in EP 1 632 533 A1. Core-shell rubber particles as described in EP 1 632 533 A1 include a crosslinked rubber core, in most cases being a crosslinked copolymer of butadiene, and a shell which is preferably a copolymer of styrene, methyl methacrylate, glycidyl methacrylate and optionally acrylonitrile. The core-shell rubber is preferably dispersed in a polymer or an epoxy resin, also as described in EP 1 632 533 A1.

The core-shell polymer may be provided in the form of a dispersion of the particles in an epoxy resin. Such a dispersion may contain, for example, 10 to 50 weight percent of the core-shell polymer, with the remainder being the epoxy resin. The epoxy resin in such a dispersion is preferably a polyglycidyl polyphenol ether as described above. Such dispersions include commercially available products such as Kane Ace^{™} MX-150, MX-154, MX-257, MX-134, MX- 135, MX-136, MX-139, MX-267, MX-215, MX- 217, MX-236 and MX-451, all from Kaneka Americas.

When the core-shell polymer is provided in the form of such a dispersion, only the weight of the core-shell polymer is counted toward the core-shell polymer of this invention. The weight of the epoxy resin and that of the polyglycidyl polyphenol ethers in such a dispersion is counted toward the corresponding components of this invention.

Preferably, the proportion of the at least one core-shell polymer **D1** is 6 - 12 % by weight, preferably 7 - 11 % by weight, more preferably 8 - 10 % by weight, based on the total weight of the thermosetting one-component epoxy resin composition. This is advantageous with respect to high values in fatigue resistance and impact peel. This is apparent, for example, in table 2 in the comparison of E1 with E2 and E3.

The composition of the invention also contains e) at least one terminally blocked polyurethane polymer **D2**.

It is preferably a terminally blocked polyurethane polymer **D2** blocked with a blocking group that is eliminated at a temperature above 100°C.

The at least one terminally blocked polyurethane polymer **D2** is preferably a terminally blocked polyurethane prepolymer of the formula (IV).

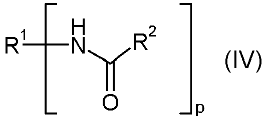

R¹ here is a p-valent radical of a linear or branched polyurethane prepolymer terminated by isocyanate groups after the removal of the terminal isocyanate groups, and p has a value of 2 to 8.

In addition, R² is independently a substituent selected from the group consisting of

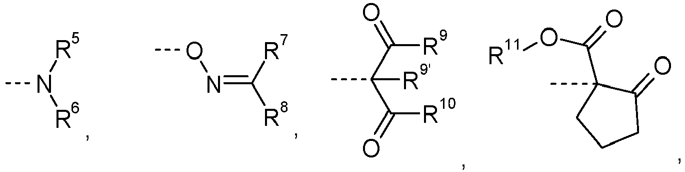

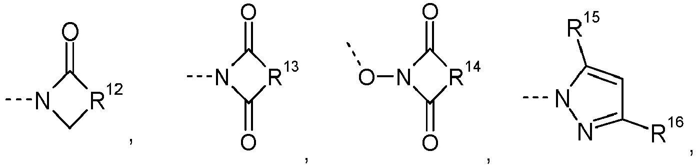

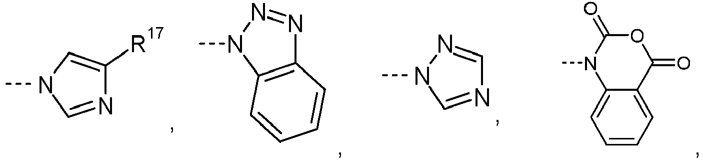

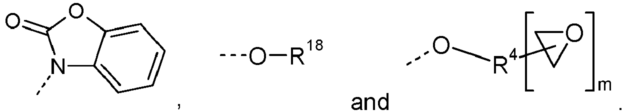

R⁵, R⁶, R⁷ and R⁸ here are each independently an alkyl or cycloalkyl or aralkyl or arylalkyl group, or R⁵ together with R⁶, or R⁷ together with R⁸, form part of a 4- to 7-membered, optionally substituted ring.

In addition, R^{9'} and R¹⁰ are each independently an alkyl or aralkyl or arylalkyl group or an alkyloxy or aryloxy or aralkyloxy group, and R¹¹ is an alkyl group.

R¹², R¹³ and R¹⁴ are each independently an alkylene group which has 2 to 5 carbon atoms and optionally has double bonds or is substituted, or a phenylene group or a hydrogenated phenylene group.

R¹⁵, R¹⁶ and R¹⁷ are each independently H or an alkyl group or an aryl group or an aralkyl group, and R¹⁸ is an aralkyl group or a mono- or polycyclic, substituted or unsubstituted aromatic group that optionally has aromatic hydroxyl groups.

Finally, R⁴ is a radical of an aliphatic, cycloaliphatic, aromatic or araliphatic epoxide containing a primary or secondary hydroxyl group after the removal of the hydroxyl and epoxy groups, and m has a value of 1, 2 or 3.

R¹⁸ is especially considered to be firstly phenols or polyphenols, especially bisphenols, after removal of a hydroxyl group. Preferred examples of such phenols and bisphenols are especially phenol, cresol, resorcinol, catechol, cardanol (3-pentadecenylphenol (from cashewnutshell oil)), nonylphenol, phenols that have been reacted with styrene or dicyclopentadiene, bisphenol A, bisphenol F and 2,2'-diallylbisphenol A. R¹⁸ is secondly considered to be especially hydroxybenzyl alcohol and benzyl alcohol after removal of a hydroxyl group.

If R⁵, R⁶, R⁷, R⁸, R⁹, R^{9'}, R¹⁰, R¹¹, R¹⁵, R¹⁶ or R¹⁷ is an alkyl group, this is especially a linear or branched C₁-C₂₀-alkyl group.

If R⁵, R⁶, R⁷, R⁸, R⁹, R^{9'}, R¹⁰, R¹⁵, R¹⁶, R¹⁷ or R¹⁸ is an aralkyl group, this moiety is especially a methylene-bonded aromatic group, especially a benzyl group.

If R⁵, R⁶, R⁷, R⁸, R⁹, R^{9'} or R¹⁰ is an alkylaryl group, this is especially a phenylene-bonded C₁- to C₂₀-alkyl group, for example tolyl or xylyl.

The R₂ radicals are preferably the substituents of the formulae

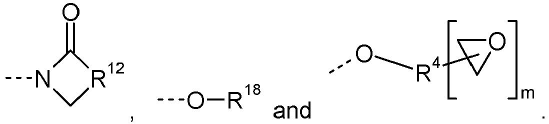

A preferred substituent of the formula 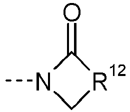 is ε-caprolactam after removal of the NH proton.

Preferred substituents of the formula --- O-R¹⁸ are monophenols or polyphenols, especially bisphenols, after removal of a phenolic hydrogen atom. Particularly preferred examples of such R² radicals are radicals selected from the group consisting of

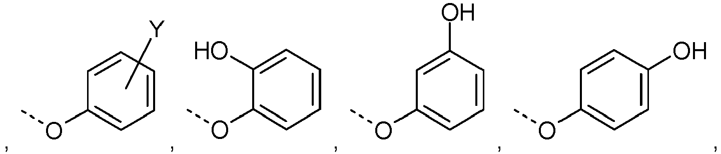

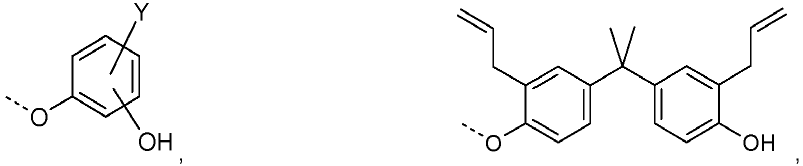

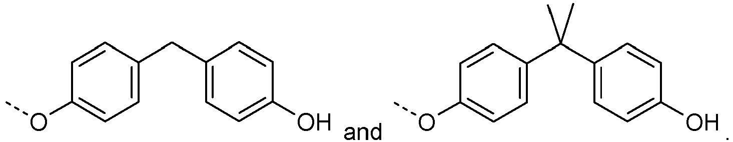

The Y radical here is a saturated, aromatic or olefinically unsaturated hydrocarbyl radical having 1 to 20 carbon atoms, especially having 1 to 15 carbon atoms. Preferred Y are especially allyl, methyl, nonyl, dodecyl, phenyl, alkyl ether, carboxylic ester or an unsaturated C₁₅-alkyl radical having 1 to 3 double bonds.

Most preferably, R² is ---O-R¹⁸.

The terminally blocked polyurethane prepolymer of the formula (IV) is prepared from the linear or branched polyurethane prepolymer terminated by isocyanate groups with one or more isocyanate-reactive compounds R²H. If two or more such isocyanate-reactive compounds are used, the reaction can be effected sequentially or with a mixture of these compounds.

The reaction is preferably effected in such a way that the one or more isocyanate-reactive compounds R²H are used stoichiometrically or in a stoichiometric excess in order to ensure that all NCO groups have been converted.

The polyurethane prepolymer with isocyanate end groups on which R¹ is based can be prepared from at least one diisocyanate or triisocyanate and from a polymer **Q_{PM}** having terminal amino, thiol or hydroxyl groups and/orfrom an optionally substituted polyphenol **Q_{PP}**.

Suitable diisocyanates are aliphatic, cycloaliphatic, aromatic or araliphatic diisocyanates, especially commercial products such as methylene diphenyl diisocyanate (MDI), hexamethylene diisocyanate (HDI), toluene diisocyanate (TDI), toluidine diisocyanate (TODI), isophorone diisocyanate (IPDI), trimethylhexamethylene diisocyanate (TMDI), 2,5- or 2,6-bis(isocyanatomethyl)bicyclo[2.2.1]heptane, naphthalene 1,5-diisocyanate (NDI), dicyclohexylmethyl diisocyanate (H₁₂MDI), p-phenylene diisocyanate (PPDI), m-tetramethylxylylene diisocyanate (TMXDI), etc. and dimers thereof. Preference is given to HDI, IPDI, MDI or TDI.

Suitable triisocyanates are trimers or biurets of aliphatic, cycloaliphatic, aromatic or araliphatic diisocyanates, especially the isocyanurates and biurets of the diisocyanates described in the previous paragraph. It is of course also possible to use suitable mixtures of di- or triisocyanates.

Especially suitable polymers **Q_{PM}** having terminal amino, thiol or hydroxyl groups are polymers **Q_{PM}** having two or three terminal amino, thiol or hydroxyl groups.

The polymers **Q_{PM}** advantageously have an equivalent weight of 300-6000, especially of 600-4000, preferably of 700-2200, g/equivalent of NCO-reactive groups.

Preferred polymers **Q_{PM}** are polyols having average molecular weights between 600 and 6000 daltons, selected from the group consisting of polyethylene glycols, polypropylene glycols, polyethylene glycol-polypropylene glycol block polymers, polybutylene glycols, hydroxyl-terminated polybutadienes, hydroxyl-terminated butadiene-acrylonitrile copolymers and mixtures thereof.

Especially preferred polymers **Q_{PM}** are α,ω-dihydroxy polyalkylene glycols having C₂-C₆-alkylene groups or having mixed C₂-C₆-alkylene groups, terminated by amino, thiol or, preferably, hydroxyl groups. Particular preference is given to polypropylene glycols or polybutylene glycols. Particular preference is further given to hydroxyl group-terminated polyoxybutylenes.

Especially suitable polyphenols **Q_{PP}** are bis-, tris- and tetraphenols. This is understood to mean not just straight phenols but optionally also substituted phenols. The nature of the substitution may be very varied. More particularly, this is understood to mean substitution directly on the aromatic ring to which the phenolic OH group is bonded. Phenols are additionally understood to mean not just monocyclic aromatics but also polycyclic or fused aromatics or heteroaromatics that have the phenolic OH group directly on the aromatic or heteroaromatic system.

In a preferred embodiment, the polyurethane prepolymer is prepared from at least one diisocyanate or triisocyanate and from a polymer **Q_{PM}** having terminal amino, thiol or hydroxyl groups. The polyurethane prepolymer is prepared in a manner known to the person skilled in the art of polyurethane, especially by using the diisocyanate or triisocyanate in a stoichiometric excess in relation to the amino, thiol or hydroxyl groups of the polymer **Q_{PM}.**

The polyurethane prepolymer having isocyanate end groups preferably has elastic character. It preferably exhibits a glass transition temperature Tg of less than 0°C.

Preferably, the proportion of the at least one terminally blocked polyurethane polymer **D2** is 3.5 - 8 % by weight, preferably 4 - 7.25 % by weight, more preferably 4.5 - 7 % by weight, based on the total weight of the thermosetting one-component epoxy resin composition. This is advantageous with respect to high values in fatigue resistance and impact peel. This is apparent, for example, in table 2 in the comparison of E1 with E2 and E3.

The weight ratio of the at least one core-shell polymer **D1** to the at least one terminally blocked polyurethane polymer **D2 (D1/D2)** is from 1.2 - 4.

It has been surprisingly found that ratios lower than 1.25 lead to the disadvantage of decreased values in fatigue resistance, Tg, tensile strength and e-modulus. This is apparent, for example, in table 2 in the comparison of Ref1 with E1-E3. It was further surprisingly found that ratios higher than 4 lead to the disadvantage of decreased values in fatigue resistance and impact peel. This is apparent, for example, in table 2 in the comparison of E1 with E2 and E3.

Preferably, the weight ratio of the at least one core-shell polymer **D1** to the at least one terminally blocked polyurethane polymer **D2 (D1/D2)** is from 1.25 - 2.75, especially 1.5 - 2.25. This is advantageous with respect to high values in fatigue resistance and impact peel. This is apparent, for example, in table 2 in the comparison of E1 with E2 and E3.

In a further preferred embodiment, the composition additionally comprises at least one filler **F**. Preference is given here to mica, talc, kaolin, wollastonite, feldspar, syenite, chlorite, bentonite, montmorillonite, calcium carbonate (precipitated or ground), dolomite, quartz, silicas (fused or precipitated), cristobalite, calcium oxide, aluminum hydroxide, magnesium oxide, hollow ceramic beads, hollow glass beads, hollow organic beads, glass beads, color pigments. Particular preference is given to fillers selected from the group consisting of calcium carbonate, calcium oxide and fumed silicas.

Advantageously, the total proportion of the overall filler **F** is 5-30% by weight, preferably 10-25% by weight, more preferably 12.5-20% by weight, based on the total weight of the thermosetting one-component epoxy resin composition.

In a further preferred embodiment, the composition additionally comprises at least one epoxy-bearing reactive diluent **G.** Such reactive diluents are known to the person skilled in the art. Preferred examples of epoxy-bearing reactive diluents are:
- glycidyl ethers of monofunctional, saturated or unsaturated, branched or unbranched, cyclic or open-chain, C₄-C₃₀ alcohols, e.g. butanol glycidyl ether, hexanol glycidyl ether, 2-ethylhexanol glycidyl ether, allyl glycidyl ether, tetrahydrofurfuryl and furfuryl glycidyl ether, trimethoxysilyl glycidyl ether, and the like;
- glycidyl ethers of difunctional, saturated or unsaturated, branched or unbranched, cyclic or open-chain, C₂-C₃₀ alcohols, e.g. ethylene glycol glycidyl ether, butanediol glycidyl ether, hexanediol glycidyl ether, octanediol glycidyl ether, cyclohexanedimethanol diglycidyl ether, neopentyl glycol diglycidyl ether, and the like;
- glycidyl ethers of tri- or polyfunctional, saturated or unsaturated, branched or unbranched, cyclic or open-chain, alcohols, such as epoxidized castor oil, epoxidized trimethylolpropane, epoxidized pentaerythritol or polyglycidyl ethers of aliphatic polyols, such as sorbitol, glycerol, trimethylolpropane, and the like;
- glycidyl ethers of phenol compounds and aniline compounds, such as phenyl glycidyl ether, cresyl glycidyl ether, p-tert-butylphenyl glycidyl ether, nonylphenol glycidyl ether, 3-n-pentadecenyl glycidyl ether (from cashewnutshell oil), N,N-diglycidylaniline, and the like;
- epoxidized amines, such as N,N-diglycidylcyclohexylamine, and the like;
- epoxidized mono- or dicarboxylic acids, such as glycidyl neodecanoate, glycidyl methacrylate, glycidyl benzoate, diglycidyl phthalate, tetrahydrophthalate and hexahydrophthalate, diglycidyl esters of dimeric fatty acids, and the like;
- epoxidized di- or trifunctional, low to high molecular weight polyether polyols, such as polyethylene glycol diglycidyl ether, polypropylene glycol diglycidyl ether, and the like.

Particular preference is given to hexanediol diglycidyl ether, cresyl glycidyl ether, p-*tert*-butylphenyl glycidyl ether, polypropylene glycol diglycidyl ether and polyethylene glycol diglycidyl ether.

Advantageously, the total proportion of the epoxy-bearing reactive diluent **G** is 0.1-15% by weight, preferably 0.1-5% by weight, especially preferably 0.1-2% by weight, more preferably 0.2-1 % by weight, based on the total weight of the thermosetting one-component epoxy resin composition.

The composition may include further constituents, especially catalysts, stabilizers, especially heat and/or light stabilizers, thixotropic agents, plasticizers, solvents, mineral or organic fillers, blowing agents, dyes and pigments, anticorrosives, surfactants, defoamers and adhesion promoters.

Suitable plasticizers are especially phenol alkylsulfonates or N-butylbenzamide, as commercially available as Mesamoll^{®} or Dellatol BBS from Bayer.

Suitable stabilizers are especially optionally substituted phenols such as BHT or Wingstay^{®} T (Elkem), sterically hindered amines or N-oxyl compounds such as TEMPO (Evonik).

A particularly preferred one-component epoxy resin composition comprises:
- 37.5 - 55 % by weight, more preferably 40 - 52.5 % by weight, most preferably 42.5 - 50 % by weight % by weight, based on the total weight of the thermosetting one-component epoxy resin composition, of at least one liquid epoxy resin **A1** having an average of more than one epoxy group per molecule;
- 10 - 25 % by weight, more preferably 12.5 - 20 % by weight, most preferably 13.5 - 17.5 % by weight, based on the total weight of the thermosetting one-component epoxy resin composition, of at least one solid epoxy resin **A2** having an average of more than one epoxy group per molecule;
- at least one latent curing agent **B** for epoxy resins, where the latent curing agent **B** is selected from dicyandiamide, guanamines, guanidines, anhydrides of polybasic carboxylic acids and aminoguanidines, preference being given to dicyandiamide, preferably in an amount of 0.1-30% by weight, especially 1-20% by weight, preferably 5-15% by weight, especially preferably 7.5-12.5 % by weight, based on the weight of the epoxy resin **A**;
- preferably at least one accelerator **C** selected from the list consisting of substituted ureas, imidazoles, imidazolines and blocked amines, especially substituted ureas, preferably the ratio of the proportion of accelerator **C** in grams per mole of the sum of the epoxy groups of the liquid epoxy resins **A1** and the solid epoxy resin **A2** is 0.1 - 5.0 g/mol of epoxy groups, especially 0.3 - 3.0 g/mol of epoxy groups, more preferably 0.5 - 2.0 g/mol of epoxy groups, most preferably 0.6 - 1.0 g/mol of epoxy groups;
- at least one core-shell polymer **D1**, preferably with a number average particle size of 10 to 300 nm, preferably 75 to 250 nm, as determined by transmission electron spectroscopy, preferably in an amount of 6 - 12 % by weight, preferably 7 - 11 % by weight, more preferably 8 - 10 % by weight, based on the total weight of the thermosetting one-component epoxy resin composition;
- at least one terminally blocked polyurethane polymer **D2**, preferably a terminally blocked polyurethane polymer blocked with a blocking group that is eliminated at a temperature above 100°C, preferably in an amount of 3.5 - 8 % by weight, preferably 4 - 7.25 % by weight, more preferably 4.5 - 7 % by weight, based on the total weight of the thermosetting one-component epoxy resin composition;
- preferably 55-30% by weight, preferably 10-25% by weight, more preferably 12.5-20% by weight, based on the total weight of the thermosetting one-component epoxy resin composition, of at least one filler **F**, preferably selected from the group consisting of calcium carbonate, calcium oxide and fumed silicas;
- preferably 0.1-15% by weight, preferably 0.1-5% by weight, especially preferably 0.1-2% by weight, more preferably 0.2-1% by weight, based on the total weight of the thermosetting one-component epoxy resin composition, of an epoxy-bearing reactive diluent **G**.

The weight ratio of the at least one liquid epoxy resin **A1** to the at least one solid epoxy resin **A2 (A1/A2)** is from 1.75 - 3.75, preferably 1.9 - 3.25, more preferably 2.25 - 3.25.

The weight ratio of the at least one core-shell polymer **D1** to the at least one terminally blocked polyurethane polymer **D2 (D1/D2)** is from 1.2 - 4, preferably 1.25 - 2.75, more preferably 1.5 - 2.25.

It may further be advantageous when the preferred one-component epoxy resin composition consists of the aforementioned constituents to an extent of more than 80% by weight, preferably more than 90% by weight, especially more than 95% by weight, based on the total weight of the epoxy resin composition.

It is advantageous when the epoxy resin composition of the invention has a viscosity at 25°C of 1000-5500 Pa*s, especially 1500-5000 Pa*s, preferably 2000-4500 Pa*s, more preferably 2000-4000 Pa*s, especially measured with a rheometer in oscillation using a plate-plate geometry with the following parameters: 5 Hz, measurement gap 1 mm, plate-plate diameter 25 mm, 1% deformation. This is advantageous in that this assures good applicability.

It has been found that the thermosetting one-component epoxy resin compositions described are particularly suitable for use as one-component thermosetting adhesives, especially as a thermosetting one-component bodywork adhesive in motor vehicle construction. Such a one-component adhesive has a range of possible uses. Such adhesives are required for the bonding of heat-stable materials. Heat-stable materials are understood to mean materials which are dimensionally stable at a curing temperature of 100 - 220°C, preferably 120 - 200°C, at least during the curing time. In particular, these are metals and plastics, such as ABS, polyamide, polyphenylene ether, composite materials, such as SMC, unsaturated polyesters GFP, epoxy or acrylate composite materials. Preference is given to the use in which at least one material is a metal. A particularly preferred use is considered to be the bonding of identical or different metals, especially in bodywork construction in the automobile industry. The preferred metals are in particular steel, especially electrolytically galvanized, hot-dip-galvanized or oiled steel, Bonazinc-coated steel, and post-phosphated steel, and also aluminum, especially in the variants which typically occur in automobile construction.

With an adhesive based on a thermosetting one-component composition of the invention, it is possible without additional metal joining techniques after preliminary curing, especially 10-180 seconds, especially for 20-80 seconds, preferably for 30-60 seconds, at 180-230°C, especially of 190-220°C, preferably of 200-210°C, in the case of further heating to 180°C, to assure sufficient adhesion of the bonded substrates.

Such an adhesive is used especially in applications that do not use any metal joining techniques, especially thermal and mechanical metal joining techniques, more preferably welding and riveting. These applications preferably first comprise precuring of the adhesive, especially 10-180 seconds, especially for 20-80 seconds, preferably for 30-60 seconds, at 180-230°C, especially of 190-220°C, preferably of 200-210°C, and subsequently, especially after cooling of the precured adhesive to below 60°C, further heating to at least 160°C, especially at least 180°C, and subsequent complete curing of the adhesive.

Such an adhesive is especially contacted first with the materials to be bonded at a temperature of between 10°C and 80°C, especially between 10°C and 60°C, then precured and later fully cured as described above.

A further aspect of the present invention relates to a process for the bonding of heat-stable substrates, which comprises the stages:
i) applying a thermosetting one-component epoxy resin composition as described in detail above to the surface of a heat-stable substrate **S1**, especially of a metal;
ii) contacting the thermosetting one-component epoxy resin composition applied with the surface of a further heat-stable substrate **S2**, especially of a metal;
iii) heating the composition to a temperature of 180-230°C, especially of 190-220°C, preferably of 200-210°C, for 10-180 seconds, especially for 20-80 seconds, preferably for 30-60 seconds,
iv) preferably heating the composition to a temperature of 100-220°C, especially of 120-200°C, preferably between 140 and 190°C, more preferably between 150 and 180°C; where the composition reaches a temperature between step iii) and step iv) of less than 100°C, especially less than 60°C, preferably 50-20°C. Preferably, there is a period of time between step iii) and step iv) of more than 15 minutes, especially more than 20 minutes, preferably ≥ 30 minutes, especially 30 to 300 minutes.

The substrate **S2** consists here of the same material as or a different material from the substrate **S1**. The substrates **S1** and/or **S2** are in particular the aforementioned metals and plastics.

Preferably, the heating in step iii) is heating by induction. It is further preferred if the heating in step iv) is heating in an oven, preferably in a paint curing oven, especially preferred a paint curing oven for vehicles.

Preferably, in step iv), the composition is heated to a temperature of 100-220°C, especially of 120-200°C, preferably between 140 and 190°C, more preferably between 150 and 180°C, and the composition is left at the aforementioned temperature for 10 min -6 h, 10 min -2 h, 10 min -60 min, 10 min - 30 min, 10 min -20 min, more preferably 10 min - 15 min.

It is further preferred if in step i) the thermosetting one-component epoxy resin composition is applied to the surface of a heat-stable substrate **S1** in the form of a bead, preferably a bead with a length of 2 - 700 cm, preferably 5 - 500 cm, and a diameter of 0.05 - 5 cm, preferably 0.1 - 2 cm, and in step iii) the composition is heated the mentioned times and temperatures only on less than 50 % of the entire length of the bead, preferably less than 20% of the entire length of the bead. In such a process, it is sufficient to induction-cure only a small amount of the applied bead to safeguard the structural integrity of the bonded article to be transported/stored until the final cure is performed, for example in step iv).

Such a method of bonding heat-stable materials results in an adhesive-bonded article. Such an article is preferably a vehicle or part of a vehicle.

A further aspect of the present invention accordingly relates to an adhesive-bonded article obtained from the abovementioned process. Furthermore, the compositions according to the invention are suitable not only for automobile construction but also for other fields of use. Particular mention should be made of related applications in the construction of transportation means, such as ships, trucks, buses or rail vehicles, or in the construction of consumer goods, such as, for example, washing machines.

The materials adhesive-bonded by means of a composition according to the invention are used at temperatures between typically 120°C and -40°C, preferably between 100°C and -40°C, in particular between 80°C and -40°C.

A particularly preferred use of the thermosetting one-component epoxy resin composition of the invention is the use thereof as a thermosetting one-component bodywork adhesive in motor vehicle construction or as a stiffening compound or as a foamable, thermosetting composition for the reinforcement of voids in structural components and reinforcing elements.

A further aspect of the present invention relates to a cured epoxy resin composition as obtained by heating a thermosetting one-component epoxy resin composition as described in detail above.

Another further aspect of the present invention relates to use of a weight ratio of at least one liquid epoxy resin **A1** to at least one solid epoxy resin **A2 (A1/A2)** that is from 1.75 - 3.75 combined with a weight ratio of at least one core-shell polymer **D1** to at least one terminally blocked polyurethane polymer **D2 (D1/D2)** being from 1.2 - 4 to improve the fatigue resistance of a thermosetting one-component epoxy resin composition. The thermosetting one-component epoxy resin composition comprises:
- at least one liquid epoxy resin **A1** having an average of more than one epoxy group per molecule;
- at least one solid epoxy resin **A2** having an average of more than one epoxy group per molecule;
- at least one latent curing agent **B** for epoxy resins, where the latent curing agent **B** is selected from dicyandiamide, guanamines, guanidines, anhydrides of polybasic carboxylic acids and aminoguanidines, preference being given to dicyandiamide;
- at least one core-shell polymer **D1**; and
- at least one terminally blocked polyurethane polymer **D2**.

The components **A1**, **A2**, **B**, **D1** and **D2** are the components as described above, including their preferred variants, preferably including the preferred features described before. The fatigue resistance is measured as described in the experimental section. Improving means that the fatigue resistance is higher compared to said thermosetting one-component epoxy resin compositions not having said combination of weight ratios **(A1/A2)** and **(D1/D2).** Preferably, the improvement of fatigue resistance (number of cycles) is more than 20 %, preferably more than 30 %.

More preferably, the compositions of the invention have the following properties:

### After preliminary curing for 35 seconds at 200°C:

LSS, measured as described in the experimental at a room temperature of > 8 MPa, especially ≥ 10 MPa, more preferably ≥ 12 MPa,
and/or
LSS, measured as described in the experimental at a temperature of 180°C, of > 0.5 MPa, especially ≥ 1.0 MPa, especially ≥ 1.5 MPa,

### After full curing for 40 minutes at 180°C:

TS, measured as described in the experimental, of ≥ 30 MPa, especially ≥ 35 MPa, especially ≥ 40 MPa;
Elongation at break (EB), measured as described in the experimental, 4-20%;
Modulus of elasticity, measured as described in the experimental, of ≥ 1000 MPa, especially ≥ 1500 MPa, more preferably ≥ 2000 MPa, most preferably ≥ 2200 MPa; Tg, measured as described in the experimental, of ≥ 115°C, especially ≥ 120°C, more preferably ≥ 125°C;
LSS, measured as described in the experimental at a room temperature of > 30 MPa, especially ≥ 32.5 MPa, more preferably ≥ 35 MPa,
   and/or
LSS, measured as described in the experimental at a temperature of 180°C, of > 0.5 MPa, especially ≥ 1.0 MPa, especially ≥ 1.5 MPa,
IP at 23°C, measured as described in the experimental, of ≥ 25 N/mm, especially ≥ 30 N/mm, more preferably ≥ 35 N/mm;
IP at -30°C, measured as described in the experimental, of ≥ 10 N/mm, especially ≥ 15 N/mm, more preferably ≥ 20 N/mm.

### Examples

Some examples which further illustrate the invention, but which are not intended to restrict the scope of the invention in any way, are cited below.

### Preparation of a toughness improver ("D2")

150 g of poly-THF 2000 (OH number 57 mg/g KOH) and 150 of Liquiflex H (OH number 46 mg/g KOH) were dried under vacuum at 105°C for 30 minutes. Once the temperature had been reduced to 90°C, 61.5 g of IPDI and 0.14 g of dibutyltin dilaurate were added. The reaction was carried out under vacuum at 90°C until the NCO content was constant at 3.10% after 2.0 h (calculated NCO content: 3.15%). Subsequently, 96.1 g of cardanol were added as blocking agent. Stirring was continued at 105°C under vacuum until it was no longer possible to detect any free NCO. The product was used as such as toughness improver ***D2*.**

| | |
|---|---|
| A1 | Liquid aromatic epoxy resin, D.E.R. 331 (bisphenol A diglycidyl ether), DOW |
| A2 | Solid epoxy resin (bisphenol A diglycidyl ether-based), Dow |
| G | Tert-Butylphenyl-glycidylether, Polypox R7, epoxy-bearing reactive diluent |
| B | Dicyandiamide, Dyhard 100SF, AlzChem |
| C | N,N-dimethylurea, Mw: 88.11 g/mol, Sigma Aldrich |
| D1 | Kane Ace MX 154, 40% core-shell polymer blend of 100 nm and 200 nm particles having a polybutadiene rubber core in liquid epoxy resin based on bisphenol-A, Kaneka |
| F1 | Calcium carbonate |
| F2 | Pyrogenic silica |
| F3 | Calcium oxide |
| Pigment | Carbon black |
| CPP | Corrosion protection particles (aluminum phosphate) |
| | Poly-THF 2000 (difunctional polybutylene glycol) (OH equivalent weight = about 1000 g/OH equivalent), BASF |
| | PolyBD R45V (hydroxyl-terminated polybutadiene) (OH equivalent weight = about 1230 g/OH equivalent), Cray Valley |
| | Isophorone diisocyanate (= "*IPDI*"), Evonik |

| | |
|---|---|
| Raw materials used. | |

### Production of the compositions

The reference compositions Ref1 and Ref2 and the inventive compositions E1 to E6 were produced according to the compositions in table 1, wherein the stated amounts are in parts by weight. The liquid epoxy resin based on bisphenol-A that is present to 60 wt.-% of the product Kane Ace MX 154, was calculated as part of the liquid epoxy resin **A1** in table 1. The core-shell polymer blend of 100 nm and 200 nm particles having a polybutadiene rubber core, present as 40% wt.-% of the the product Kane Ace MX 154, was calculated as core-shell polymer **D1.The** ratio of the proportion of the sum of the epoxy groups of the liquid epoxy resin **A1** and the solid epoxy resin **A2** in mol and the epoxy-bearing reactive diluent **G** in mol / proportion of curing agent **B** in mol **((A1+A2+G)/B)** is 5.2. The ratio of the proportion of accelerator **C** in grams per mole of the sum of the epoxy groups of the liquid epoxy resin **A1** and the solid epoxy resin **A2** and the epoxy-bearing reactive diluent **G** is 0.8 g/mol.

### Test methods:

### Tensile strength (TS), elongation at break (EB) and modulus of elasticity (E-modulus) (DIN EN ISO 527)

An adhesive sample was pressed between two Teflon papers to a layer thickness of 2 mm. After curing at 180°C for 40 min, the Teflon papers were removed, and the specimens were die-cut to the DIN standard state. The test specimens were examined under standard climatic conditions at a strain rate of 2 mm/min. Tensile strength (ZF), elongation at break and the 0.05-0.25% modulus of elasticity were measured to DIN EN ISO 527 at a temperature of 23°C.

### Lap shear strength inductive preliminary curing Tmax 200°C (LSS ind1) (DIN EN 1465)

Cleaned test specimens of Elo H420 steel (thickness 1.5 mm) that had been reoiled with Anticorit PL 3802-39S were bonded with the adhesive over a bonding area of 25 × 10 mm with glass beads as spacer in a layer thickness of 0.3 mm. Thereafter, the samples are heated by induction (EW2 laboratory induction system, manufacturer: IFF GmbH Deutschland) to a temperature of 200°C, within 10 seconds, and left at a temperature of 200°C for 35 seconds (object temperature). Thereafter, the samples were brought to a temperature of 120°C by means of compressed air within 10 seconds, and then the samples were left to cool to 23°C.

Lap shear strength was determined using a tensile tester at a strain rate of 10 mm/min in a triple determination to DIN EN 1465 at a temperature of 23°C ("LSS ind1 @ RT"), or at a temperature of 180°C ("LSS ind1 @ 180°C").

### Lap shear strength inductive preliminary curing Tmax 210°C (LSS ind2) (DIN EN 1465)

Cleaned test specimens of Elo H420 steel (thickness 1.5 mm) that had been reoiled with Anticorit PL 3802-39S were bonded with the adhesive over a bonding area of 25 x 10 mm with glass beads as spacer in a layer thickness of 0.3 mm. Thereafter, the samples are heated by induction (EW2 laboratory induction system, manufacturer: IFF GmbH Deutschland) to a temperature of 210°C, within 10 seconds, and left at a temperature of 210°C, for 35 seconds (object temperature). Thereafter, the samples were brought to a temperature of 120°C by means of compressed air within 10 seconds, and then the samples were left to cool to 23°C.

Lap shear strength was determined using a tensile tester at a strain rate of 10 mm/min in a triple determination to DIN EN 1465 at a temperature of 23°C ("LSS ind2 @ RT"), or at a temperature of 180°C ("LSS ind2 @ 180°C").

### Lap shear strength oven curing for 40 min/180°C (LSS) (DIN EN 1465)

Cleaned test specimens of Elo H420 steel (thickness 1.5 mm) that had been reoiled with Anticorit PL 3802-39S were bonded with the adhesive over a bonding area of 25 x 10 mm with glass beads as spacer in a layer thickness of 0.3 mm, and cured at oven temperature 180°C for 40 min.

Lap shear strength was determined on a tensile tester at a strain rate of 10 mm/min in a triple determination to DIN EN 1465 at a temperature of 23°C ("LSS @ RT"), or at a temperature of 180°C ("LSS @ 180°C").

### impact peel strength (IP @ 23°C/-30 °C) (ISO 11343)

The specimens were produced with the adhesive and DC04+ZE steel with dimensions of 90 × 20 × 0.8 mm. The bonding area here was 20 × 30 mm at a layer thickness of 0.3 mm with glass beads as spacer. The samples were cured for 40 minutes at oven temperature 180°C. Impact peel strength was measured at 23°C, or at -30°C, as a triple determination on a Zwick 450 impact pendulum. The impact peel strength reported is the average force in N/mm under the measurement curve from 25% to 90% to ISO11343.

### Determination of the fatigue resistance ("Fatigue")

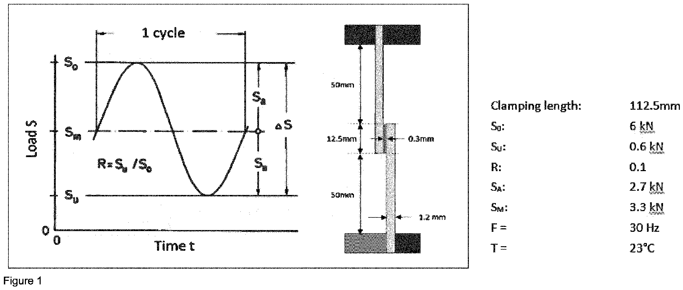

The fatigue tests were performed only at a single stress level (i.e. 1 point of the "Wöhler" curve). The maximum load was set to 6 kN and the stress amplitude to +/-2.7 kN, which results in an R of 0.1. For testing, lap shear specimens were prepared according to shown Figure 1. Curing of the adhesive was done at 180°C for 20min. The substrate used was galvanized steel (H420) with 1.2mm thickness oiled with 3g/m² Anticorit PL 3802-39S. The stated results (Fatigue cycles to failure "Fatigue") are average values obtained form 5 individual sample measurements.

### Viscosity

Viscosity measurements of the adhesives were effected 1 d after production on an Anton Paar MCR 101 rheometer by oscillation using a plate-plate geometry at a temperature of 25°C with the following parameters: 5 Hz, measurement gap 1 mm, plate-plate diameter 25 mm, 1% deformation. The analysed compositions R1 - R2 and E1 to E6 all had a viscosity of 2000-4000 Pa*s.

**Table 1, n.d. = not determined**

| Composition | **Ref1** | **E1** | **E2** | **E3** | **E4** | **E5** | **E6** | **Ref2** |
|---|---|---|---|---|---|---|---|---|
| A1 | 37.75 | 34.00 | 32.93 | 32.12 | 29.50 | 32.57 | 36.50 | 38.10 |
| G | 1.00 | 1.00 | 1.00 | 1.00 | 1.00 | 1.00 | 1.00 | 1.00 |
| A2 | 15.50 | 15.50 | 15.50 | 15.50 | 21.50 | 18.43 | 14.33 | 12.90 |
| D1 | 18.75 | 25.00 | 26.78 | 28.13 | 22.50 | 22.50 | 22.50 | 22.50 |
| D2 | 7.50 | 5.00 | 4.29 | 3.75 | 6.00 | 6.00 | 6.00 | 6.00 |
| B | 4.81 | 4.74 | 4.82 | 4.83 | 4.49 | 4.79 | 4.88 | 4.96 |
| C | 0.24 | 0.24 | 0.24 | 0.24 | 0.22 | 0.24 | 0.24 | 0.25 |
| F1 | 3.00 | 3.00 | 3.00 | 3.00 | 3.00 | 3.00 | 3.00 | 3.00 |
| F2 | 8.00 | 8.00 | 8.00 | 8.00 | 8.00 | 8.00 | 8.00 | 8.00 |
| F3 | 5.00 | 5.00 | 5.00 | 5.00 | 5.00 | 5.00 | 5.00 | 5.00 |
| Pigment | 0.15 | 0.15 | 0.15 | 0.15 | 0.15 | 0.15 | 0.15 | 0.15 |
| CPP | 3.00 | 3.00 | 3.00 | 3.00 | 3.00 | 3.00 | 3.00 | 3.00 |
| Total | **104.70** | **104.63** | **104.71** | **104.72** | **104.36** | **104.68** | **104.60** | **104.86** |
| (D1/D2) | 1 | 2 | 2.5 | 3 | 1.5 | 1.5 | 1.5 | 1.5 |
| (A1/A2) | 3.2 | 3.2 | 3.2 | 3.2 | 2 | 2.5 | 3.5 | 4 |

**Table 2, n.d. = not determined**

| | **Ref1** | **E1** | **E2** | **E3** | **E4** | **E5** | **E6** | **Ref2** |
|---|---|---|---|---|---|---|---|---|
| (D1/D2) | 1.00 | 2.00 | 2.50 | 3.00 | 1.50 | 1.50 | 1.50 | 1.50 |
| (A1/A2) | 3.16 | 3.16 | 3.16 | 3.16 | 2.00 | 2.50 | 3.49 | 4.00 |
| | | | | | | | | |
| E-modulus [MPa] | 2230 | 2380 | 2370 | 2390 | 2300 | 2200 | 2100 | 2130 |
| EB [%] | 7.4 | 5.6 | 6.9 | 6.3 | 6.1 | 7.2 | 4.1 | 3.7 |
| TS [MPa] | 45.6 | 46.4 | 48.2 | 47.6 | 45.5 | 45.4 | 39.5 | 39.2 |
| LSS ind1 @ RT [MPa] | 18.3 | 15.2 | 16.6 | 17.2 | 13.8 | 14.7 | 11.7 | n.d. |
| LSS ind1 @ 180°C [MPa] | 2.10 | 1.60 | 2.20 | 2.00 | 1.70 | 2.20 | 1.20 | n.d. |
| LSS ind2 @ RT [MPa] | 21.60 | 17.60 | 20.90 | 21.40 | 16.60 | 20.70 | 14.30 | n.d. |
| LSS ind2 @ 180°C [MPa] | 2.00 | 1.70 | 1.80 | 2.00 | 1.70 | 1.90 | 1.00 | n.d. |
| LSS @ RT [MPa] | 36.8 | 36.7 | 38.7 | 39.3 | 37.5 | 37.4 | 34.9 | n.d. |
| LSS @ 180°C [MPa] | 2.2 | 2.1 | 2.3 | 2.3 | 2.4 | 2.1 | 2.1 | 2 |
| IP @ RT [N/mm] | 40.3 | 37.6 | 37.3 | 36.3 | 38 | 42.1 | 38.2 | n.d. |
| IP @ -30°C [N/mm] | 24.3 | 22.3 | 19 | 16.2 | 23.2 | 23.2 | 21.2 | 21.1 |
| Tg [°C] | 127 | 129 | 130 | 132 | 127 | 127 | 129 | 129 |
| Fatigue [n cycles] | 2239 | 3757 | 3176 | n.d. | 6362 | 6215 | 5557 | 3031 |

## Claims

1. A thermosetting one-component epoxy resin composition comprising
a) at least one liquid epoxy resin **A1** having an average of more than one epoxy group per molecule, preferably 37.5 - 55 % by weight, more preferably 40 - 52.5 % by weight, most preferably 42.5 - 50 % by weight % by weight, based on the total weight of the thermosetting one-component epoxy resin composition;
b) at least one solid epoxy resin **A2** having an average of more than one epoxy group per molecule, preferably 10 - 25 % by weight, more preferably 12.5 - 20 % by weight, most preferably 13.5 - 17.5 % by weight, based on the total weight of the thermosetting one-component epoxy resin composition;
c) at least one latent curing agent **B** for epoxy resins, where the latent curing agent **B** is selected from dicyandiamide, guanamines, guanidines, anhydrides of polybasic carboxylic acids and aminoguanidines, preference being given to dicyandiamide;
d) at least one core-shell polymer **D1**; and
e) at least one terminally blocked polyurethane polymer **D2**;
wherein the weight ratio of the at least one liquid epoxy resin **A1** to the at least one solid epoxy resin **A2 (A1/A2)** is from 1.75 - 3.75 and wherein the weight ratio of the at least one core-shell polymer **D1** to the at least one terminally blocked polyurethane polymer **D2 (D1/D2)** is from 1.2 - 4.

2. The thermosetting one-component epoxy resin composition as claimed in claim 1, **characterized in that** the weight ratio of the at least one liquid epoxy resin **A1** to the at least one solid epoxy resin **A2 (A1/A2)** is from 1.9 - 3.25, preferably 2.25 - 3.25.

3. The thermosetting one-component epoxy resin composition as claimed in any of the preceding claims, **characterized in that** the weight ratio of the at least one core-shell polymer **D1** to the at least one terminally blocked polyurethane polymer **D2 (D1/D2)** is from 1.25 - 2.75, especially 1.5 - 2.25.

4. The thermosetting one-component epoxy resin composition as claimed in any of the preceding claims, **characterized in that** the thermosetting one-component epoxy resin composition additionally includes at least one accelerator **C** selected from the list consisting of substituted ureas, imidazoles, imidazolines and blocked amines, especially substituted ureas.

5. The thermosetting one-component epoxy resin composition as claimed in claim 4, **characterized in that** the ratio of the proportion of accelerator **C** in grams per mole of the sum of the epoxy groups of the liquid epoxy resins **A1** and the solid epoxy resin **A2** is 0.1 - 5.0 g/mol of epoxy groups, especially 0.3 - 3.0 g/mol of epoxy groups, more preferably 0.5 - 2.0 g/mol of epoxy groups, most preferably 0.6 - 1.0 g/mol of epoxy groups.

6. The thermosetting one-component epoxy resin composition as claimed in any of the preceding claims, **characterized in that** the proportion of the at least one liquid epoxy resin **A1** is 37.5 - 55 % by weight, more preferably 40 - 52.5 % by weight, most preferably 42.5 - 50 % by weight, based on the total weight of the thermosetting one-component epoxy resin composition and/or, preferably and, the proportion of the at least one solid epoxy resin **A2** is 10 - 25 % by weight, preferably 12.5 - 20 % by weight, more preferably 13.5 - 17.5 % by weight, based on the total weight of the thermosetting one-component epoxy resin composition.

7. The thermosetting one-component epoxy resin composition as claimed in any of the preceding claims, **characterized in that** the proportion of the at least one core-shell polymer **D1** is 6 - 12 % by weight, preferably 7 - 11 % by weight, more preferably 8 - 10 % by weight, based on the total weight of the thermosetting one-component epoxy resin composition and/or, preferably and, the proportion of the at least one terminally blocked polyurethane polymer **D2** is 3.5 - 8 % by weight, preferably 4 - 7.25 % by weight, more preferably 4.5 - 7 % by weight, based on the total weight of the thermosetting one-component epoxy resin composition.

8. The thermosetting one-component epoxy resin composition as claimed in any of the preceding claims, **characterized in that** the at least one core-shell polymer **D1** has a number average particle size of 10 to 300 nm, preferably 75 to 250 nm, as determined by transmission electron spectroscopy, and/or, preferably and, the at least one terminally blocked polyurethane polymer **D2** is a terminally blocked polyurethane polymer blocked with a blocking group that is eliminated at a temperature above 100°C.

9. The thermosetting one-component epoxy resin composition as claimed in any of the preceding claims, **characterized in that** the thermosetting one-component epoxy resin composition additionally includes 5-30% by weight, preferably 10-25% by weight, more preferably 12.5-20 % by weight, based on the total weight of the thermosetting one-component epoxy resin composition, of at least one filler **F**, preferably selected from the group consisting of calcium carbonate, calcium oxide and fumed silicas.

10. The use of a thermosetting one-component epoxy resin composition as claimed in any of claims 1 to 9 as one-component thermosetting adhesive, especially as thermosetting one-component bodywork adhesive in motor vehicle construction.

11. A method of bonding heat-stable substrates, comprising the steps of
i) applying a thermosetting one-component epoxy resin composition as claimed in any of claims 1 to 9 to the surface of a heat-stable substrate **S1,** especially of a metal;
ii) contacting the thermosetting epoxy resin composition applied with the surface of a further heat-stable substrate **S2**, especially of a metal;
iii) heating the composition to a temperature of 180-230°C, especially of 190-220°C, preferably of 200-210°C, for 10-180 seconds, especially for 20-80 seconds, preferably for 30-60 seconds,
iv) preferably heating the composition to a temperature of 100-220°C, especially of 120-200°C, preferably between 140 and 190°C, more preferably between 150 and 180°C; where the composition reaches a temperature between step iii) and step iv) of less than 100°C, especially less than 60°C, preferably 50-20°C;
in which the substrate **S2** consists of the same material as or a different material from the substrate **S1**.

12. The method as claimed in claim 11, wherein there is a period of time between step iii) and step iv) of more than 15 minutes, especially more than 20 minutes, preferably ≥ 30 minutes, especially 30 to 300 minutes.

13. The method as claimed in claim 11 or 12, wherein the heating in step iii) is heating by induction.

14. The method as claimed in claim 11 to 13, wherein, in step iv) of heating the composition to a temperature of 100-220°C, especially of 120-200°C, preferably between 140 and 190°C, more preferably between 150 and 180°C, the composition is left at the aforementioned temperature for 10 min - 6 h, 10 min - 2 h, 10 min - 60 min, 10 min - 30 min, 10 min - 20 min, more preferably 10 min - 15 min, preferably in a paint curing oven, especially preferred a paint curing oven for vehicles.

15. An adhesive-bonded article obtained from a process as claimed in any of claims 11 to 14.

16. The use of a weight ratio of at least one liquid epoxy resin **A1** to at least one solid epoxy resin **A2 (A1/A2)** that is from 1.75 - 3.75 combined with a weight ratio of at least one core-shell polymer **D1** to at least one terminally blocked polyurethane polymer **D2 (D1/D2)** being from 1.2 - 4, to improve the fatigue resistance of a thermosetting one-component epoxy resin composition, wherein the fatigue resistance is measured as described in the experimental section, wherein the improvement of the fatigue resistance (number of cycles) is compared to said thermosetting one-component epoxy resin compositions not having said combination of weight ratios **(A1/A2)** and **(D1/D2)** and wherein the thermosetting one-component epoxy resin composition comprises:
- at least one liquid epoxy resin **A1** having an average of more than one epoxy group per molecule;
- at least one solid epoxy resin **A2** having an average of more than one epoxy group per molecule;
- at least one latent curing agent **B** for epoxy resins, where the latent curing agent **B** is selected from dicyandiamide, guanamines, guanidines, anhydrides of polybasic carboxylic acids and aminoguanidines, preference being given to dicyandiamide;
- at least one core-shell polymer **D1**; and
- at least one terminally blocked polyurethane polymer **D2**;
preferably, the improvement of fatigue resistance (number of cycles) is more than 20 %, more preferably more than 30 %.
